# EUROPEAN PATENT SPECIFICATION

(11) **EP 1 116 217 B1**
(45) Date of publication and mention of the grant of the patent: **13.08.2003**
(21) Application number: 99947801.9
(22) Date of filing: 30.09.1999
(51) Int. Cl.: G10L 13/04, G06F 17/27, G10L 15/26

(54) **VOICE COMMAND NAVIGATION OF ELECTRONIC MAIL READER**
SPRACHGESTEUERTE NAVIGATION FÜR EINEN ELEKTRONISCHEN POST LESER
NAVIGATION PAR COMMANDE VOCALE POUR LECTEUR DE COURRIER ELECTRONIQUE

(30) Priority: 30.09.1998 US 102472 P
(43) Date of publication of application: 18.07.2001
(73) Proprietor: Lernout & Hauspie Speech Products N.V., 8900 Ieper (BE)
(72) Inventor: VAN TICHELEN, Luc, B-8790 Waregem (BE)
(74) Representative: Froud, Clive
(86) International application number: IB9901689
(87) International publication number: WO00019408

(56) References cited:
- US-A- 5 634 084
- KITAI M ET AL: "ASR and TTS telecommunications applications in Japan" SPEECH COMMUNICATION,NL,ELSEVIER SCIENCE PUBLISHERS, AMSTERDAM, vol. 23, no. 1-2, 1 October 1997 (1997-10-01), page 17-30 XP004117205 ISSN: 0167-6393
- WU C -H ET AL: "SPEECH ACTIVATED TELEPHONY EMAIL READER (SATER) BASED ON SPEAKER VERIFICATION AND TEXT-TO-SPEECH CONVERSION" IEEE TRANSACTIONS ON CONSUMER ELECTRONICS,US,IEEE INC. NEW YORK, vol. 43, no. 3, August 1997 (1997-08), page 707-715 XP000742553 ISSN: 0098-3063
- PATENT ABSTRACTS OF JAPAN vol. 1997, no. 05, 30 May 1997 (1997-05-30) & JP 09 016372 A (RICOH CO LTD), 17 January 1997 (1997-01-17)
- PATENT ABSTRACTS OF JAPAN vol. 1998, no. 10, 31 August 1998 (1998-08-31) & JP 10 117234 A (CANON INC), 6 May 1998 (1998-05-06)
- PATENT ABSTRACTS OF JAPAN vol. 1998, no. 02, 30 January 1998 (1998-01-30) & JP 09 261344 A (NIPPON TELEGR &TELEPH CORP <NTT>), 3 October 1997 (1997-10-03)

## Description

### Technical Field

The present invention relates to a text-to-speech reader application that is directed by natural language spoken commands via a voice controlled interface.

### Background Art

Text-to-speech (TTS) systems convert a text source, e.g., e-mail, into artificial speech, disclosed, for example, in U.S. Patent 5,634,084 to Malsheen et al. This can be convenient when a text source is accessible, but no text display devices are available. A common example of this situation is accessing e-mail messages remotely by telephone. Such remote accessing of e-mail messages has previously been directed in ways similar to remote accessing systems for voice mail-typically, by telephone number pad keystrokes, or, in advanced systems, isolated word speech recognition with spoken commands such as "play", "next", "pause", "delete", etc.

When listening to TTS reading of a text source such as an e-mail message, a user of previously existing systems may be frustrated by problems in contending with long texts. It is possible, however, with prior art systems to stop the reading of a long message and to move to the next message.

### Summary of the Invention

A preferred embodiment of the present invention provides a text-to-speech system. Such a system includes a text parser for receiving a sequence of characters representing an input text and establishing markers that divide the sequence of characters into a sequence of audible sections, a text-to-speech reader coupled to the text parser and having a directable pointer for identifying an audible section that the text-to-speech reader shall convert into artificial speech, and a voice controlled user interface in communication with the text-to-speech reader for allowing a user to direct the pointer to a desired marker.

In a further embodiment, the text parser establishes the markers based on heuristics, or by at least one predetermined rule. The at least one predetermined rule may include the occurrence in the input text of a predetermined sequence of characters, or a predetermined number of characters. A minimum number of characters may be required to occur in the input text between adjacent markers, or a maximum number of text characters may be allowed to occur in the input text between adjacent markers, or both. In addition, the directable pointer may be linked to parameters descriptive of audible characteristics associated with the audible section identified by the directable pointer.

A preferred embodiment also includes a method of processing text into speech. Such a method includes receiving in a text parser a sequence of characters representing an input text and establishing markers that divide the sequence of characters into a sequence of audible sections, identifying an audible section that shall be converted into artificial speech by a text-to-speech reader coupled to the text parser and having a directable pointer, and allowing a user to direct the pointer to a desired marker with a voice controlled user interface in communication with the text-to-speech reader.

In a further embodiment, the markers are established based on heuristics, or based on at least one predetermined rule. The at least one predetermined rule may include the occurrence in the input text of a predetermined sequence of characters, or a predetermined number of characters. A minimum number of characters may be required to occur in the input text between adjacent markers, or a maximum number of characters may be allowed to occur in the input text between adjacent markers, or both. In addition, the directable pointer may be linked to parameters descriptive of audible characteristics associated with the audible section identified by the directable pointer.

### Brief Description of the Drawings

The present invention will be more readily understood by reference to the following detailed description taken with the accompanying drawings, in which:
Fig. 1 illustrates a basic block diagram of a voice directed text-to-speech reader according to a preferred embodiment.
Fig. 2 illustrates an input text separated into audible sections according to a preferred embodiment.

### Detailed Description of Specific Embodiments

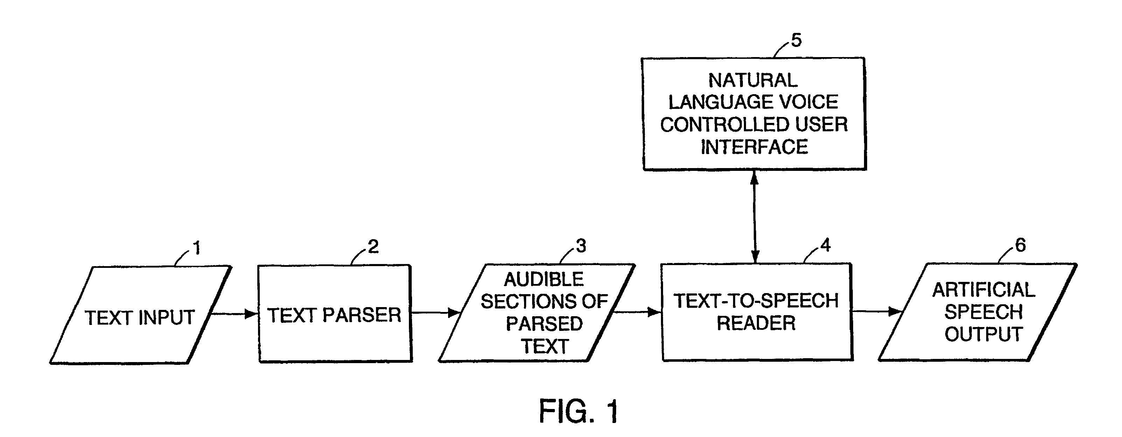

A preferred embodiment of the present invention, as shown in Fig. 1, takes a text input **1** that is a sequence of text characters and processes it in a text parser **2** that establishes break position markers that separate the text input **1** into a sequence of audible sections **3** of parsed text. The audible sections **3** are input to a text-to-speech (TTS) reader **4** that is controlled by a natural language voice controlled user interface **5**. The TTS reader **4** outputs artificial speech **6** to the user. In a typical application, the text input **1** is an e-mail message for output to a system user over a telephone line. The audible sections **3** are approximately paragraph-sized which allows the user to enjoy convenient navigation within a text so that the position of the reader voice is easily directed to desired textual locations.

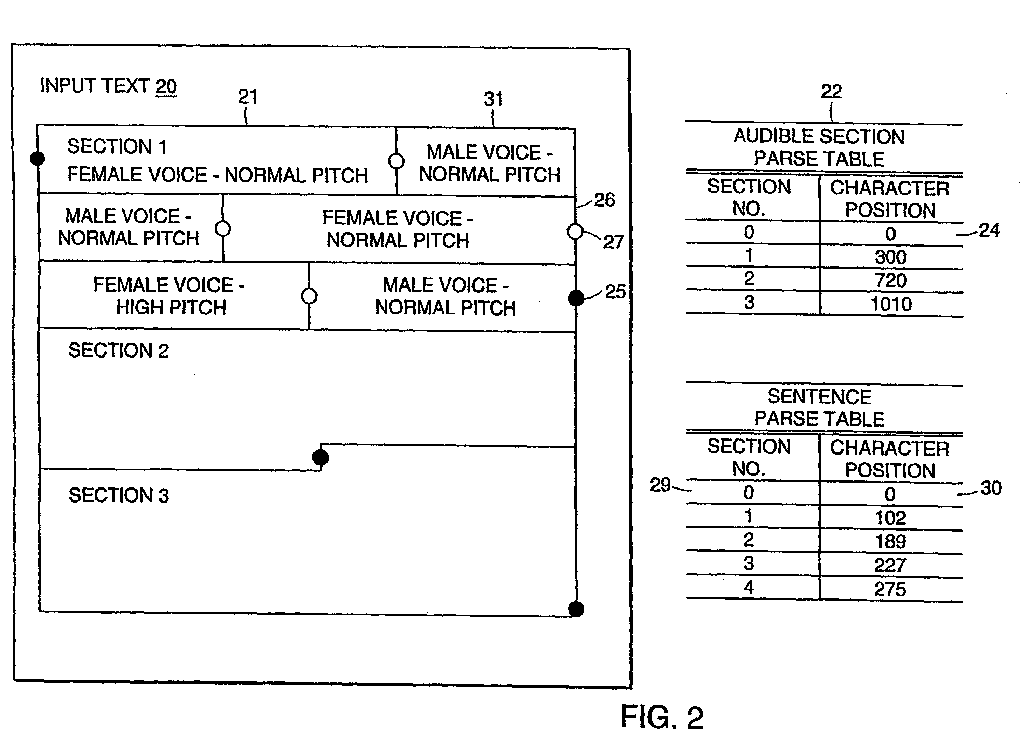

As shown in Fig. 2, a preferred embodiment breaks up the input text **20** into audible sections **21** that are approximately paragraph sized. An audible section parse table **22** is created that associates with each audible section **21** a section number **23** and a character position **24** within the input text **20** and that marks the position of a section break position marker **25** at the end of the audible section **21**. The character position **24** of the section break position marker **25** is determined according to character count and various parsing rules. For example, a section break position marker **23** may be created by two successive blank lines, by a carriage return followed by a capital letter, or by a numeral followed by a period and a space. Where section break position markers **25** are initially relatively close, as indicated by a small numerical difference between successive character positions **24** in the audible section parse table **22**, a preferred embodiment will delete one of the section break position markers **25** to avoid creating audible sections **21** which are inconveniently short, in effect, merging an overly short audible section into an adjacent audible section. At the end of the input text **20**, it may also be necessary to merge an overly short final audible section into the immediately preceding audible section.

Audible sections **21** which are initially too long must also be adjusted by splitting them into two or more shorter audible sections. In a preferred embodiment, an appropriate character position **24** in which to insert such a section break position marker **25** may be determined heuristically. For example, a break position marker **25** may be inserted within an overly long audible section **21** where a period occurs at the end of a line of input text **20,** or where a given line of input text **20** contains a single character.

Within an active audible section **21** of a preferred embodiment, individual sentences **26** must be extracted by inserting sentence break position markers **27** at suitable positions within the audible section **21**. For an active audible section **21**, a sentence parse table **28** is created similar to the audible section parse table **22**. The sentence parse table **28** associates with each sentence **26** a sentence number **29** and a character position **30** within the audible section **21** and which marks the position of a sentence break position marker **27** at the end of the sentence **26**. In a preferred embodiment, the sentence parse table **28** is dynamically updated during processing of the input text **20**. After use, the sentence parse table **28** may either be deleted, or optionally it may be retained for processing multiple audible sections **21**.

The sentence parse table **28** may also be advantageously utilized to store various ITS reader mode parameters **31** that are associated with each sentence **26** or a position within the sentence identified, for example, by character count; *e.g.*, speech font profiles―old man, young girl, etc.; as well as speaker volume, pitch, rate, alternative pronunciations for a word, etc. When the user changes the location of the TTS reader within the text, the TTS reader is updated as to appropriate TTS parameters **31**, based on the new location of the TTS reader, such parameter data having been previously identified and stored. Alternatively, such data may be dynamically regenerated based on the new position.

Inserting audible section break position markers to separate the text input, **1** in Fig. 1, into audible sections **3** significantly increases the user's control over the system. The user can provide a natural language command through the voice-controlled user interface **5** to replay the last audible section **3** in order to rehear important information without having to restart the TTS reader **4** at the beginning of the text input **1**. Similarly, a user can easily skip to the next audible section **3** if the current audible section seems uninteresting. In effect, by sequentially listening to the beginnings of audible sections **3**, a user can audibly skim the artificial speech output **6** that represents a text input **1**. Such audible skimming capability is a significant improvement over the prior art which forces a user to listen to each text fully, from the beginning.

In addition, as noted above, a preferred embodiment employs a natural language voice-controlled interface **5**. Using an application-specific grammar which supports natural language commands in combination with a continuous speech recognition engine creates a robust and powerful control interface **5**. Such a system represents a significant advance in the art over the limited vocabulary, isolated word model speech recognition engine previously used in such a voice-controlled interface. Users are no longer limited to simple menustyle commands such as "play", "pause", "next", etc., but may instead engage the system in a conversational dialog and speak in full sentences just as they would with a live person.

In a continuous speech recognition natural language voice-controlled interface **5**, such as the one used in a preferred embodiment, the user's initial learning curve is reduced, while the user's operating confidence level increases. As a result of the user's increased confidence and the significantly greater power of the natural language interface, more complex processing features may be added to the system which the user is more capable of utilizing effectively.

The user may provide natural language spoken commands, in a preferred embodiment, to perform operations as in a keyboard-directed e-mail reader program to read, reply, forward, send, delete, etc. The user may also direct the reader with natural language commands such as to read the next sentence, repeat the previous paragraph, skip this section, etc. In addition, a user may compose, forward, reply, or send message by voice input. In one embodiment, this is accomplished by recording a spoken message as in ordinary voice mail. The recorded message may be compressed in a WAV compatible format and attached to the newly created e-mail message. Alternatively, a pre-defined template may be utilized. A template is text that can be referenced by means of a keyword. When an e-mail is created, the user is prompted for a template keyword and the associated text is pasted into the newly-created message. Such templates may be personalized. In a preferred embodiment, a user profile must be established before initially using the system. The user profile includes an e-mail account ID, password, address book, templates, and preferred language to be spoken and recognized. Once the user profile has been completed, the user may call and log into the system by providing an account ID and password. Once the user account ID and password is confirmed by the system, the user may engage a voice controlled interface to process their e-mail messages. Interaction between the user and the system is controlled by full duplex natural language dialogs. Barge-in is supported so that the user does not have to wait until the system has finished speaking, but can interrupt to provide a new input.

The user may select e-mail to be read by date, since last call, unread messages, by sender address, or search by keyword. Once a message is selected, the message header is processed to extract relevant header fields. In addition, provision is made to handle improper words such as abbreviations, acronyms, names, domains, URLs, dates, emoticons, etc. Such header handling and processing of improper words is described in commonly owned U.S. Patent 5,634,084 issued to Malsheen et al.

## Claims

1. A text-to-speech system comprising:
a text parser (2) for receiving a sequence of characters representing an input text (1) and establishing markers that divide the sequence of characters into a sequence of audible sections (3);
a text-to-speech reader (4) coupled to the text parser and having a directable pointer for identifying an audible section that the text-to-speech reader shall convert into artificial speech (6); and
a voice controlled user interface (5) in communication with the text-to-speech reader for allowing a user to direct the pointer to a desired marker.

2. A text-to-speech system as in claim 1, wherein the text parser establishes the markers based on heuristics.

3. A text-to-speech system as in claim 1, wherein the text parser establishes the markers based on at least one predetermined rule.

4. A text-to-speech system as in claim 3, wherein the at least one predetermined rule includes the occurrence in the input text of a predetermined sequence of characters.

5. A text-to-speech system as in claim 3, wherein the at least one predetermined rule includes the occurrence in the input text of a predetermined number of characters.

6. A text-to-speech system as in claim 5, wherein at least a minimum number of characters must occur in the input text between adjacent markers.

7. A text-to-speech system as in claim 5, wherein at most a maximum number of characters may occur in the input text between adjacent markers.

8. A text-to-speech system as in claim 1, wherein the directable pointer is linked to parameters descriptive of audible characteristics associated with the audible section identified by the directable pointer.

9. A method of processing text into speech comprising:
receiving in a text parser a sequence of characters representing an input text and establishing markers that divide the sequence of characters into a sequence of audible sections;
identifying an audible section that shall be converted into artificial speech by a text-to-speech reader coupled to the text parser and having a directable pointer; and
allowing a user to direct the pointer to a desired marker with a voice controlled user interface in communication with the text-to-speech reader.

10. A method as in claim 9, wherein the markers are established based on heuristics.

11. A method as in claim 9, wherein the markers are established based on at least one predetermined rule.

12. A method as in claim 11, wherein the at least one predetermined rule includes the occurrence in the input text of a predetermined sequence of characters.

13. A method as in claim 11, wherein the at least one predetermined rule includes the occurrence in the input text of a predetermined number of characters.

14. A method as in claim 13, wherein at least a minimum number of characters must occur in the input text between adjacent markers.

15. A method as in claim 13, wherein at most a maximum number of characters may occur in the input text between adjacent markers.

16. A method as in claim 9, wherein the directable pointer is linked to parameters descriptive of audible characteristics associated with the audible section identified by the directable pointer.

## Patentansprüche

1. Text/Sprache-Umwandlungssystem, welches aufweist:
einen Text-Analysealgorithmus (2) zum Empfangen einer Folge von Schriftzeichen, welche einen Eingangstext (1) darstellen, und Setzen von Markern, welche die Folge von Schriftzeichen in eine Folge von hörbaren Abschnitten (3) aufteilen;
Lesegerät (4) zur Text/Sprache-Umwandlung, welches mit dem Text-Analysealgorithmus gekoppelt ist und welches einen führbaren Zeiger zum Identifizieren eines hörbaren Abschnitts besitzt, welchen das Lesegerät zur Text/Sprache-Umwandlung in künstliche Sprache (6) wandeln soll; und
ein sprachgesteuertes Nutzer-Interface (5) in Kommunikation mit dem Lesegerät zur Text/Sprache-Umwandlung, welches einem Nutzer gestattet, den Zeiger auf einen gewünschten Marker zu richten.

2. Text/Sprache-Umwandlungssystem nach Anspruch 1, wobei der Text-Analysealgorithmus die Marker basierend auf Heuristik erstellt.

3. Text/Sprache-Umwandlungssystem nach Anspruch 1, wobei der Text-Analysealgorithmus die Marker basierend auf wenigstens einer vorher festgelegten Regel erstellt.

4. Text/Sprache-Umwandlungssystem nach Anspruch 3, wobei die wenigstens eine vorher festgelegte Regel das Auftreten im Eingabetext einer vorher festgelegten Folge von Schriftzeichen beinhaltet.

5. Text/Sprache-Umwandlungssystem nach Anspruch 3, wobei die wenigstens eine vorher festgelegte Regel das Auftreten einer vorher festgelegten Anzahl von Schriftzeichen im Eingangstext beinhaltet.

6. Text/Sprache-Umwandlungssystem nach Anspruch 5, wobei wenigstens eine Minimalanzahl von Schriftzeichen in dem Eingangstext zwischen benachbarten Markern auftreten muss.

7. Text/Sprache-Umwandlungssystem nach Anspruch 5, wobei höchstens eine maximale Anzahl von Schriftzeichen in dem Eingangetext zwischen benachbarten Markern auftreten darf.

8. Text/Sprache-Umwandlungssystem nach Anspruch 1, wobei der führbare Zeiger mit Parametern verknüpft ist, welche hörbare Charakteristika beschreiben, welche mit dem hörbaren Abschnitt verbunden sind, welcher durch den führbaren Zeiger identifiziert wird.

9. Verfahren zum Verarbeiten von Text in Sprache, welches aufweist:
Empfangen einer Folge von Schriftzeichen in einem Text-Analysealgorithmus, welche einen Eingangstext darstellen, und Setzen von Markern, welche die Folge von Schriftzeichen in eine Folge von hörbaren Abschnitten aufteilen;
Identifizieren eines hörbaren Abschnittes, welcher in eine künstliche Sprache über ein Lesegerät zur Text/Sprache-Umwandlung gewandelt werden soll, welches mit dem. Text-Analysealgorithmus gekoppelt ist und welches einen führbaren Zeiger besitzt; und
Gestatten, dass ein Nutzer den Zeiger auf einen gewünschten Marker richtet, über ein sprachgesteuertes Nutzer-Interface, welches mit dem Lesegerät zur Text/Spracbe-Umwandlung in Kommunikation steht.

10. Verfahren nach Anspruch 9, wobei die Marker basierend auf Heuristik erstellt werden.

11. Verfahren nach Anspruch 9, wobei die Marker basierend auf wenigstens einer vorher festgelegten Regel erstellt werden.

12. Verfahren nach Anspruch 11, wobei die wenigstens eine vorher festgelegte Regel das Auftreten einer vorher festgelegten Folge von Schriftzeichen im Eingangstext beinhaltet.

13. Verfahren nach Anspruch 11, wobei die wenigstens eine vorher festgelegte Regel das Auftreten einer vorher festgelegten Anzahl von Schriftzeichen im Eingangstext beinhaltet.

14. Verfahren nach Anspruch 13, wobei wenigstens eine Minimalanzahl von Schriftzeichen im Eingangstext zwischen benachbarten Markern auftreten muss.

15. Verfahren nach Anspruch 13, wobei höchstens eine Maximalanzahl von Schriftzeichen im Eingangstext zwischen benachbarten Markern auftreten darf.

16. Verfahren nach Anspruch 9, wobei der führbare Zeiger mit Parametern verknüpft ist, welche die hörbare Charakteristik beschreiben, welche mit dem hörbaren Abschnitt verbunden ist, welcher durch den führbaren Zeiger identifiziert wird.

## Revendications

1. Système texte-vers-parole comprenant :
un analyseur syntaxique de tfpexte (2) pour la réception d'une séquence de caractères représentant un texte d'entrée (1) et pour l'établissement de marqueurs qui divisent la séquence de caractères en une séquence de sections audibles (3) ;
un lecteur texte-vers-parole (4) couplé à l'analyseur syntaxique de texte et ayant un pointeur dirigeable pour l'identification d'une section audible que le lecteur texte-vers-parole convertira en parole artificielle (6) ; et,
une interface utilisateur à commande vocale (5) en communication avec le lecteur texte-vers-parole pour permettre à un utilisateur de diriger le pointeur vers un marqueur souhaité.

2. Système texte-vers-parole selon la revendication 1, dans lequel l'analyseur syntaxique de texte établit les marqueurs en utilisant une méthode heuristique.

3. Système texte-vers-parole selon la revendication 1, dans lequel l'analyseur syntaxique de texte établit les marqueurs au moyen d'au moins une règle prédéterminée.

4. Système texte-vers-parole selon la revendication 3, dans lequel ladite au moins une règle prédéterminée comprend l'occurrence dans le texte d'entrée d'une séquence de caractères prédéterminée.

5. Système texte-vers-parole selon la revendication 3, dans lequel ladite au moins une règle prédéterminée comprend l'occurrence dans le texte d'entrée d'un nombre de caractères prédéterminé.

6. Système texte-vers-parole selon la revendication 5, dans lequel au moins un nombre minimum de caractères doit apparaître dans le texte d'entrée entre marqueurs adjacents.

7. Système texte-vers-parole selon la revendication 5, dans lequel au plus un nombre maximum de caractères doit apparaître dans le texte d'entrée entre marqueurs adjacents.

8. Système texte-vers-parole selon la revendication 1, dans lequel le pointeur dirigeable est lié à des paramètres décrivant des caractéristiques audibles associées à la section audible identifiée par le pointeur dirigeable.

9. Procédé de conversion de texte en parole comprenant les étapes consistant à :
recevoir dans un analyseur syntaxique de texte une séquence de caractères représentant un texte d'entrée et établir des marqueurs qui divisent la séquence de caractères en une séquence de sections audibles ;
identifier une section audible qui sera convertie en parole artificielle par un lecteur texte-vers-parole couplé à l'analyseur syntaxique de texte et ayant un pointeur dirigeable ; et,
permettre à un utilisateur de diriger le pointeur vers un marqueur souhaité avec une interface utilisateur à commande vocale en communication avec le lecteur texte-vers-parole.

10. Procédé selon la revendication 9, dans lequel les marqueurs sont établis en utilisant une méthode heuristique.

11. Procédé selon la revendication 9, dans lequel les marqueurs sont établis au moyen d'au moins une règle prédéterminée.

12. Procédé selon la revendication 11, dans lequel ladite au moins une règle prédéterminée comprend l'occurrence dans le texte d'entrée d'une séquence de caractères prédéterminée.

13. Procédé selon la revendication 11, dans lequel ladite au moins une règle prédéterminée comprend l'occurrence dans le texte d'entrée d'un nombre de caractères prédéterminé.

14. Procédé selon la revendication 13, dans lequel au moins un nombre minimum de caractères doit apparaître dans le texte d'entrée entre marqueurs adjacents.

15. Procédé selon la revendication 13, dans lequel au plus un nombre maximum de caractères peut apparaître dans le texte d'entrée entre marqueurs adjacents.

16. Procédé selon la revendication 9, dans lequel le pointeur dirigeable est lié à des paramètres décrivant des caractéristiques audibles associées à la section audible identifiée par le pointeur dirigeable.
